# FASCICULE DE BREVET EUROPEEN

(11) **EP 1 686 076 B1**
(45) Date de publication et mention de la délivrance du brevet: **18.07.2007**
(21) Numéro de dépôt: 06370002.5
(22) Date de dépôt: 27.01.2006
(51) Int. Cl.: B65F 3/00

(54) **Véhicule de collecte de produits, tels que notamment des déchets ménagers, stockés dans des contenants, tels que notamment des poubelles**
Fahrzeug zum Sammeln von in Behältern, insbesondere Müllbehältern, gelagerten Produkten, insbesondere Müll
Vehicle for collecting of products, especially refuse, stored in receptacles, especially refuse receptacles

(30) Priorité: 31.01.2005 FR 0500945
(43) Date de publication de la demande: 02.08.2006
(73) Titulaire: Flamme Environnement Société Anonyme, 59330 St. Remy du Nord (FR)
(72) Inventeur: Flamme, Hubert c/o Flamme Environnement, 59330 St. Remy du Nord (FR); Flamme, Etienne c/o Flamme Environnement, 59330 St. Remy du Nord (FR)
(74) Mandataire: Duthoit, Michel Georges André

(56) Documents cités:
- EP-A- 0 683 115
- FR-A- 2 787 404
- GB-A- 2 116 491

## Description

La présente invention a trait à un véhicule de collecte de produits, tels que notamment des déchets ménagers, stockés dans des contenants, tels que notamment des poubelles, selon le preambule de la revendication. Le EP-A-683 115 divulgue un tel véhicule ou camion benne.

Dans ce document, le camion benne est équipé d'une trémie arrière de chargement. Généralement, lors d'une tournée, une équipe de collecte se compose d'un conducteur pour le camion, pour avancer le véhicule jusqu'à chaque point de collecte, et d'un ou de deux éboueurs appelés ripeurs, qui ont pour tâche de déverser les produits à collecter dans la trémie.

Pendant la tournée, entre chaque point de collecte, le ou les ripeurs se tiennent sur des marchepieds, situés en porte-à-faux à l'arrière du véhicule, en se maintenant debout à l'aide de poignées. Ces marchepieds sont de façon courante situés latéralement à droite ou à gauche à l'arrière de la trémie.

Ainsi, les ripeurs ne sont pas abrités des intempéries. De plus, les ripeurs sont exposés et vulnérables puisqu'ils ne sont pas protégés par une barrière physique, alors que le danger de collision avec un véhicule est bien réel. En effet, la vitesse du camion benne est limitée à 30 km/h lorsqu'un ripeur est présent sur un marchepied. Ainsi, un véhicule arrivant derrière est susceptible alors de le percuter par temps de mauvaise visibilité et/ou de circulation dense et rapide et/ou route glissante

Par ailleurs, le marchepied arrière gauche est plus exposé à un danger de collision d'un véhicule venant de l'arrière, doublant ou non le véhicule, ou encore croisant ce dernier. Le ripeur situé sur ce marchepied, à l'arrière gauche du véhicule, pour se rendre jusqu'au trottoir doit de plus parcourir à chaque arrêt, pour ramasser les déchets, une distance supplémentaire, à l'aller et au retour, correspondant globalement à la largeur du camion.

Il est alors tenté de traverser la voie pour effectuer une collecte bilatérale, pour de plus, ne pas être gêné par son collègue ripeur. Or, cette collecte bilatérale est dangereuse et interdite par la recommandation R388 de la C.N.A.M.

De plus, les marchepieds installés en porte-à-faux ne doivent pas dépasser un seuil réglementaire, qui en France est de 45 cm d'emmarchement. Cette position rend le marchepied vulnérable pour le ripeur installé dessus. En effet, à l 'occasion de manoeuvres du véhicule, les marchepieds sont fréquemment accrochés par des obstacles inférieurs et latéraux du type clôtures, bas-côtés trop hauts, etc...

La présente invention a pour but de remédier à ces inconvénients en proposant un véhicule de collecte, améliorant notamment la sécurité et le confort des ripeurs.

Un autre but de l'invention est de proposer un véhicule de collecte dont la vitesse de circulation entre chaque point de collecte peut être augmentée.

Un autre but de l'invention est de proposer un véhicule de collecte dont le volume utile de chargement n'est pas sensiblement altéré.

D'autres buts et avantages de la présente invention apparaîtront au cours de la description qui va suivre, qui n'est cependant donnée qu'à titre indicatif et qui n'a pas pour but de la limiter.

L'invention concerne un véhicule de collecte de produits, tels que notamment des déchets ménagers, contenus dans des contenants, tels que notamment des poubelles, ledit véhicule comprenant un châssis automoteur porteur, au moins un réceptacle principal pour la collecte des produits, et au moins un poste arrière de chargement, le réceptacle principal étant au moins équipé d'une structure porte principale, apte dans une première position, à maintenir ledit au moins un réceptacle principal fermé, et dans une deuxième position, dite de dégagement, à s'escamoter pour permettre le vidage dudit réceptacle principal, ledit poste arrière de chargement étant équipé au moins d'une trémie de chargement d'undit au moins un réceptacle principal et d'un dispositif basculeur présentant des moyens de prise d'un contenant afin de le vider dans la trémie de chargement, caractérisé en ce que le véhicule présente en outre un bâti arrière, disposé entre la trémie de chargement et le dispositif de basculement, apte d'une part à constituer une réservation pour accueillir, au moins en partie, une cabine arrière, notamment pour la protection d'au moins un ripeur, et apte d'autre part à permettre au dispositif de basculement de contourner, par le haut, ladite au moins une cabine, et de déverser les produits dudit contenant dans ladite trémie de chargement, ledit bâti arrière coopérant en outre avec ladite structure porte pour escamoter ladite cabine arrière lors du vidage de réceptacle principal.

L'invention sera mieux comprise à la lecture de la description suivante accompagnée des dessins en annexe parmi lesquels :
- la figure 1 est une vue schématique de côté d'un véhicule de collecte conforme à l'invention,
- la figure 2 est une vue de coupe selon un plan horizontal du véhicule de collecte tel qu'illustré à la figure 1,
- la figure 3 est une vue schématique de côté d'un véhicule de collecte selon un second mode de réalisation,
- la figure 4 est une vue de coupe selon un plan horizontal du véhicule de collecte tel qu'illustré à la figure 3,
- la figure 5 est une vue d'un véhicule tel qu'illustré à la figure 1 ou à la figure 3, le bâti étant escamoté pour permettre le vidage d'un réceptacle dit secondaire.

L'invention concerne un véhicule de collecte 1 de produits, tels que notamment des déchets ménagers, contenus dans des contenants, tels que notamment des poubelles, ou sacs poubelles ou similaires.

Ledit véhicule 1 comprend un châssis automoteur 3 portant au moins un réceptacle principal 30 pour la collecte des produits, et au moins un poste arrière de chargement / déchargement.

Ledit au moins un réceptacle principal 30 étant au moins équipé d'une structure porte principale 8, apte dans une première position, à maintenir ledit au moins un réceptacle principal fermé, et dans une deuxième position, dite de déchargement, à s'escamoter pour permettre le vidage dudit au moins un réceptacle principal.

Ledit poste arrière de chargement 10 étant équipé au moins d'une trémie de chargement d'undit au moins un réceptacle principal et d'au moins un dispositif basculeur 14 présentant des moyens de prise d'undit contenant 2 afin de le vider dans la trémie de chargement.

Selon l'invention, le véhicule 1 présente en outre un bâti arrière 7, disposé entre la trémie de chargement 9 et le dispositif basculeur 14, apte d'une part à constituer une réservation pour accueillir, au moins en partie, une cabine arrière 12, notamment pour la protection d'au moins un ripeur, et apte d'autre part, à permettre au dispositif basculeur 14 de contourner vers le haut ladite au moins une cabine arrière 12, et déverser le contenant dans ladite trémie de chargement 9.

En outre, ledit bâti arrière 7 coopère avec ladite structure porte 8 pour escamoter ladite cabine lors du vidage dudit au moins un réceptacle principal.

Il est à noter que ladite cabine est particulièrement, mais non exclusivement destinée au ripeur. En effet, il pourrait être prévu de stocker dans la cabine tout matériel, ou de l'équiper de toute installation utile.

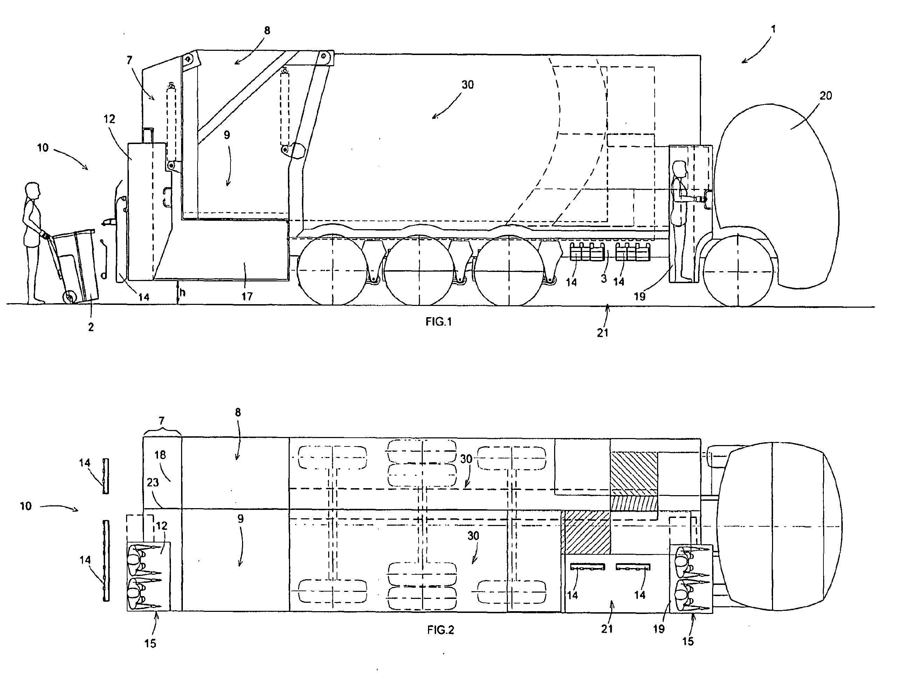

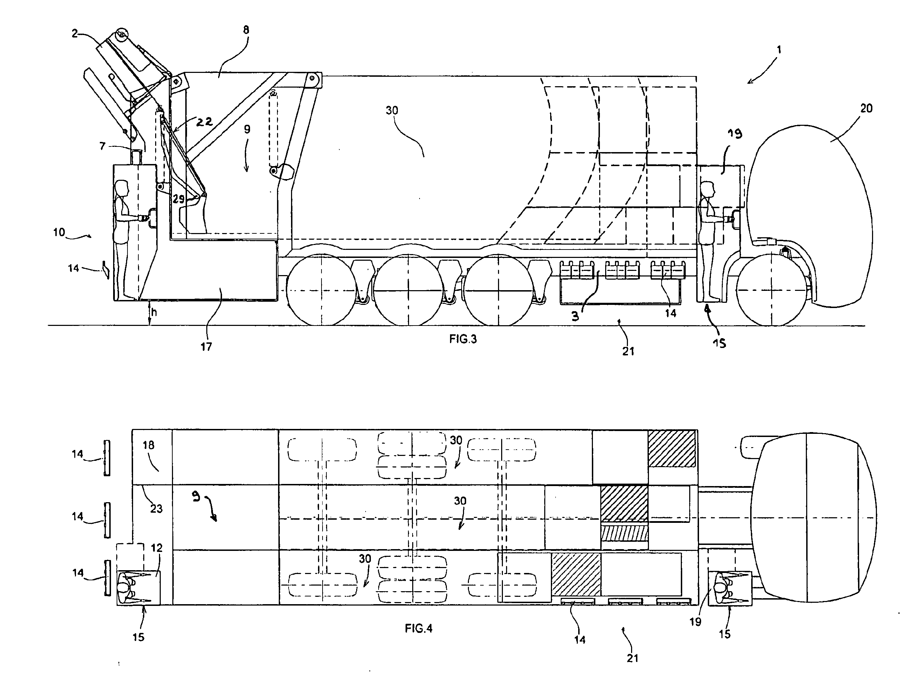

Aussi, telle qu'illustrée à la figure 2 ou encore à la figure 4, la cabine arrière 12 est partiellement intégrée par la structure du bâti 7.

Par ailleurs, la cabine est située entre une traverse de préhension 14 d'un dispositif basculeur et la trémie 9. Ces dispositions permettent avantageusement de protéger la cabine lors d'une collision, notamment d'un automobiliste venant de l'arrière du véhicule. Le dispositif basculeur 14 constitue en effet un obstacle physique protégeant la cabine. Par ailleurs, la cabine 12 est intégrée en tout ou partie au bâti 7.

Tel qu'illustré à la figure 1, le dispositif basculeur 14 présente des moyens de prise d'un contenant 2. Le dispositif basculeur présente en outre des moyens d'actionnement et d'entraînement, tels qu'un bras articulé, pour contourner la cabine par le haut et déverser les produits dudit contenant 2 dans la trémie de chargement dans une position telle qu'illustrée à la figure 3. Une rive 22 permet alors de guider le flux de produit déversé dans la trémie 9.

Selon un mode de réalisation, le bâti arrière 7 fait saillie en-dessous de la structure porte principale 8 pour positionner le seuil de la cabine arrière 12. En France, par exemple, la réglementation impose une hauteur « h » d'emmarchement au maximum de 45 cm par rapport au sol. Aussi, le bâti arrière protège la cabine arrière sur toute sa longueur.

Cela étant, le bâti arrière 7 peut constituer au moins en partie, un réceptacle secondaire 17 pour la collecte de produits et une cheminée 18 pour le guidage de flux de produits déversés dans ledit réceptacle secondaire 17. Tel qu'illustré à la figure 1 ou 3, le véhicule 1 présente un réceptacle secondaire 17, situé en porte-à-faux du châssis 3, sous le seuil de la trémie 9 de la structure porte principale 8.

Ce réceptacle secondaire est notamment destiné à la collecte de produits creux, tels que du verre. Le bâti 7 constitue, en outre, une cheminée 18 pour le guidage de produits déversés dans ce réceptacle.

Telle qu'illustrée à la figure 4, ou à la figure 2, la cheminée 18 est par exemple constituée par les parois extérieures du bâti 7 ainsi que par une cloison de séparation verticale 23 disposée longitudinalement audit bâti, notamment pour isoler la cabine des produits déversés.

Ce dispositif basculeur 14 présente des moyens de prise et des moyens d'actionnement et d'entraînement pour disposer un contenant 2 dans une position similaire à la position du contenant, tel qu'illustré à la figure 3.

Néanmoins, contrairement à la figure 3, la rive 22 peut être escamotée pour permettre la chute des produits dans ladite cheminée 18. Cette rive 22 est notamment articulée au moyen d'une liaison pivot horizontale 29 et munie de moyens d'actionnement tels qu'un vérin.

Avantageusement, la cabine arrière 12 est disposée latéralement au bâti arrière 7, l'ouverture d'accès 15 de la cabine étant orientée latéral du réceptacle principal 20, côté trottoir.

On entend par côté trottoir le côté du véhicule sur le territoire duquel se trouve effectivement le trottoir. Il s'agira par exemple, en France, du côté droit du véhicule, et en Angleterre du côté gauche du véhicule. Cette disposition est prise pour dissuader les ripeurs d'effectuer une collecte bilatérale de la chaussée.

Selon un mode de réalisation, le bâti arrière 7 constitue, en outre, une seconde structure porte articulée à ladite structure porte principale 8, ladite seconde structure porte étant apte à s'escamoter pour permettre le vidage dudit réceptacle secondaire 7.

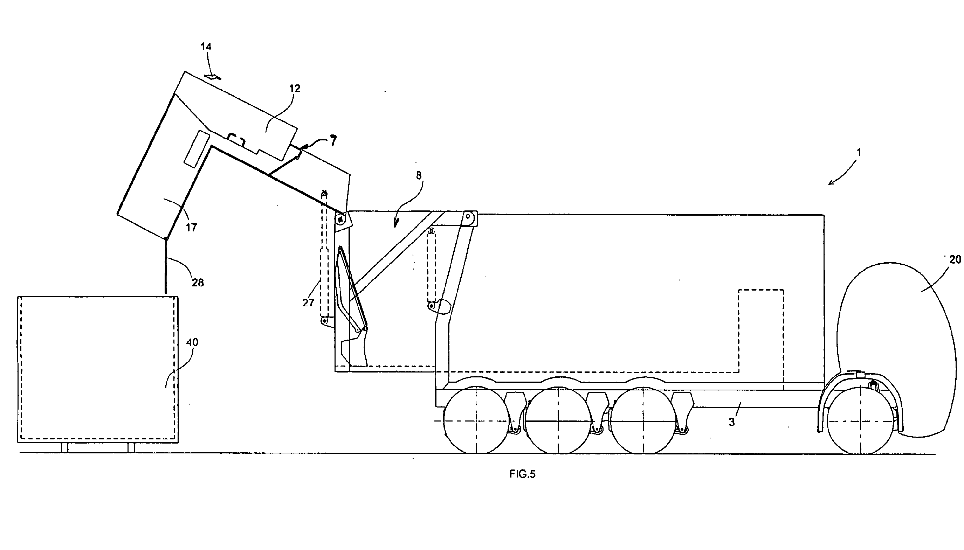

Aussi, tel qu'illustré à la figure 5, le bâti 7 est articulé à l'extrémité supérieure de la structure porte principale 8 et constitue une seconde structure porte. Ladite seconde structure porte peut être actionnée au moyen au moins d'un vérin 27 pour disposer le réceptacle secondaire 17 en porte-à-faux du véhicule et dans une position élevée, à une hauteur suffisante pour disposer ledit réceptacle secondaire 17 à l'aplomb et au-dessus d'une trémie de stockage 40.

Le réceptacle secondaire peut être équipé d'une trappe de déchargement 28 ainsi que de moyens de verrouillage et d'actionnement pour l'ouverture de ladite trappe.

Selon un mode de réalisation, la cabine arrière 12 présente une fenêtre de vision, telle qu'une vitre apte à permettre au moins une vue vers l'arrière du véhicule de l'intérieur de la cabine arrière. Ainsi, cette cabine peut constituer un poste de sécurité permettant, notamment, lors d'une marche arrière d'éviter un accident.

Aussi, pour ce faire, la cabine arrière 12 de protection peut être équipée d'un dispositif de commande autorisant ou non la marche arrière du véhicule. Ce dispositif de commande, dans le cas d'une marche arrière, peut présenter des moyens d'urgence pour immobiliser le véhicule, provoquant un freinage d'urgence du véhicule actionné, notamment par une poignée dans la cabine.

Le véhicule peut présenter en outre un deuxième poste de chargement 21 avant, le véhicule présentant en outre une cabine avant 19 latérale de protection d'au moins un ripeur.

La cabine 19 est située entre la cabine de conduite 20 et undit réceptacle principal 30. Cette dernière présente une ouverture d'accès côté trottoir et est intégrée au véhicule de façon que son extrémité basse soit disposée à hauteur réglementaire. La cabine avant 19 ne dépassera bien entendu pas du véhicule sur son flanc latéral.

Avantageusement, la et/ou les cabines de protection 12, 19 et/ou la cabine de conduite 20 du véhicule 1 sont équipées de moyens audio et/ou vidéo d'émission et de réception, afin de permettre au(x) ripeur(s) concerné(s) de dialoguer avec le conducteur du véhicule et/ou aux ripeurs de dialoguer entre eux. Les moyens audio peuvent être constitués par un haut-parleur et un micro, les moyens vidéo constitués notamment par un écran LCD et une caméra numérique.

Selon un mode de réalisation, au moins une cabine de protection 12 ; 19 présente une porte apte à fermer ladite cabine. Cette porte permettra d'isoler et de protéger le ripeur. Avantageusement, la porte sera battante, ou coulissante pour ne pas faire saillie du véhicule.

Par ailleurs, la cabine 12 ; 19 pourra être équipée d'un siège pour le ripeur, présentant une ceinture de sécurité, afin d'augmenter la sécurité du ripeur et de permettre une vitesse de déplacement plus importante.

Naturellement, d'autres modes de mise en oeuvre, à la portée de l'homme de l'art, auraient pu encore être envisagés sans pour autant sortir du cadre de l'invention.

## Revendications

1. Véhicule de collecte (1) de produits, tels que notamment des déchets ménagers, contenus dans des contenants (2), tels que notamment des poubelles, ledit véhicule (1) comprenant un châssis automoteur (3) portant au moins un réceptacle principal (30) pour la collecte des produits et au moins un poste arrière (10) de chargement/déchargement, ledit au moins un réceptacle principal (30) étant au moins équipé d'une structure porte principale (8), apte dans une première position, à maintenir ledit au moins un réceptacle principal (30) fermé, et dans une deuxième position, dite de dégagement, à s'escamoter pour permettre le vidage dudit au moins un réceptacle principal (30), ledit poste arrière (10) de chargement étant équipé au moins d'une trémie de chargement (9) dudit au moins un réceptacle principal (30) et d'un dispositif basculeur (14) présentant des moyens de prise d'undit contenant (2), afin de le vider dans ladite trémie de chargement (9), **caractérisé en ce que** le véhicule (1) présente en outre un bâti arrière (7), disposé entre la trémie de chargement (9) et le dispositif basculeur (14), apte d'une part à constituer une réservation pour accueillir, au moins en partie, une cabine arrière (12), notamment pour la protection d'au moins un ripeur, et apte d'autre part à permettre au dispositif basculeur (14) de contourner par le haut ladite au moins une cabine (12) et de déverser les produits dudit contenant (2) dans ladite trémie de chargement (9), ledit bâti arrière (7) coopérant en outre avec ladite structure porte pour escamoter ladite cabine (12) lors du vidage du réceptacle principal (30).

2. Véhicule selon la revendication 1, dans lequel le bâti arrière (7) fait saillie en-dessous de la structure porte principale (8) pour positionner le seuil de la cabine (12).

3. Véhicule selon la revendication 1, dans lequel la cabine arrière (12) est disposée latéralement au bâti arrière (7), l'ouverture d'accès (15) de la cabine étant orientée côté latéral du réceptacle principal (30).

4. Véhicule selon la revendication 1, dans lequel le bâti arrière constitue, au moins en partie, un réceptacle secondaire (17) pour la collecte de produits, et une cheminée (18) pour le guidage du flux desdits produits déversés dans ledit réceptacle secondaire (17).

5. Véhicule selon la revendication 4, dans lequel le bâti arrière (7) constitue, en outre, une seconde structure porte, articulée à ladite structure porte principale (8), ladite seconde structure porte étant apte à s'escamoter pour permettre le vidage dudit réceptacle secondaire (17).

6. Véhicule selon la revendication 1, dans lequel la cabine arrière (12) présente une fenêtre de vision apte à permettre au moins une vue vers l'arrière du véhicule de l'intérieur de ladite cabine arrière.

7. Véhicule selon la revendication 1, présentant en outre un deuxième poste de chargement (21) avant, ledit véhicule présentant en outre une cabine avant (19) latérale de protection d'au moins un ripeur.

8. Véhicule selon l'une des revendications 1 ou 7, dans lequel la et/ou les cabines de protection (12 ; 19) et/ou la cabine de conduite (20) du véhicule, sont équipées de moyens audio et/ou vidéo d'émission et de réception, afin de permettre au ripeur concerné de dialoguer avec le conducteur du véhicule, et/ou aux ripeurs de dialoguer entre eux.

9. Véhicule selon la revendication 1, dans lequel la cabine arrière (12) est équipée d'un dispositif de commande autorisant ou non la marche arrière du véhicule, ledit dispositif de commande, dans le cas d'une marche arrière, présentant des moyens d'urgence pour immobiliser le véhicule.

10. Véhicule selon la revendication 1 ou 7, dans lequel au moins une cabine de protection (12 ; 19) présente une porte apte à fermer ladite cabine, voire un siège pour le ripeur, équipé d'une ceinture de sécurité.

## Claims

1. A vehicle for the collection (1) of products, such as in particular household refuse, contained in containers (2), such as in particular dustbins, said vehicle (1) including a supporting chassis (3) carrying at least one main receptacle (30) for the collection of products and at least one rear station (10) for loading/unloading, said at least one main receptacle (30) being at least fitted with a main door structure (8), capable in a first position, of maintaining said at least one main receptacle (30) closed, and in a second position, so-called clearance position, of retracting for emptying said at least one main receptacle (30), said rear station (10) for loading being fitted at least with a loading hopper (9) of said at least one main receptacle (30) and with a tipping device (14) exhibiting means for grasping one said container (2), so as to empty it in said loading hopper (9), **characterised in that** the vehicle (1) exhibits moreover a rear stand (7), arranged between the loading hopper (9) and the tipping device (14), capable of forming on the one hand a recess for accommodating, at least partially, a rear cabin (12), in particular for the protection of at least one skid, and capable on the other hand of allowing the tipping device (14) to by-pass over the top said at least one cabin (12) and to dump the products from said container (2) into said loading hopper (9), said rear stand (7) co-operating moreover with said door structure to retract said cabin (12) when emptying the main receptacle (30).

2. A vehicle according to claim 1, wherein the rear stand (7) protrudes beneath the main door structure (8) to locate the threshold of the cabin (12).

3. A vehicle according to claim 1, wherein the rear cabin (12) is arranged laterally to the rear stand (7), the access opening (15) of the cabin being oriented on the lateral side of the main receptacle (30).

4. A vehicle according to claim 1, wherein the rear stand forms, at least partially, a secondary receptacle (17) for the collection of products, and a flue (18) for guiding the flow of said dumped products in said secondary receptacle (17).

5. A vehicle according to claim 4, wherein the rear stand (7) forms, moreover, a second door structure, hinged to said main door structure (8), said second door structure being capable of retracting for emptying said secondary receptacle (17).

6. A vehicle according to claim 1, wherein the rear cabin (12) exhibits a viewing window capable of allowing at least one backward view of the vehicle of the Inside of said rear cabin.

7. A vehicle according to claim 1, exhibiting moreover a second front loading station (21), said vehicle exhibiting moreover a lateral front cabin (19) for protecting at least one skid.

8. A vehicle according to any of the claims 1 to 7, wherein the protection cabin(s) (12; 19) and/ or the driving cabin (20) of said vehicle, are fitted with transmission and reception audio and/or video means, so as to enable the skid operator affected to dialogue with the vehicle's driver, and/or the kid operators to dialogue together.

9. A vehicle according to claim 1, wherein the rear cabin (12) is fitted with a control device authorising or not the reverse gear of the vehicle, said control device, In the case of a reverse gear, exhibiting emergency means for immobilising the vehicle.

10. A vehicle according to claim 1 to 7, wherein at least one protection cabin (12 : 19) exhibits a door capable of closing said cabin, possibly a seat for the skid operator, fitted with a safety belt.

## Patentansprüche

1. Fahrzeug zum Sammeln (1) von Produkten, wie insbesondere von Haushaltsabfällen, die in Behältern (2), wie insbesondere in Mülltonnen, enthalten sind, wobei das besagte Fahrzeug (1) ein motorgetriebenes Fahrgestell (3) umfaßt, das wenigstens einen Hauptbehälter (30) für die Sammlung der Produkte und wenigstens eine hintere Station (10) für die Auffüllung/Entleerung trägt, wobei der besagte, wenigsten eine Hauptbehälter (30) mit wenigstens einer Haupttürstruktur (8) ausgestattet sei, die geeignet ist, um, in einer ersten Position, den besagten, wenigstens einen Hauptbehälter (30) geschlossen zu halten, und, in einer zweiten Position, die als Freisetzungsposition bezeichnet wird, sich einzuziehen, um die Entleerung des besagten, wenigstens einen Hauptbehälters (30) zu erlauben, wobei die besagte hintere Station (10) für die Auffüllung mit wenigstens einem Ladetrichter zum Befüllen (9) des besagten, wenigstens einen. Hauptbehälters (30) und mit einer Kippvorrichtung (14) ausgestattet sei, die Mittel zum Greifen eines besagten Behälters (2) aufweist, um diesen in den besagten Ladetrichter (9) auszuleeren, **dadurch gekennzeichnet, daß** das Fahrzeug (1) außerdem ein hinteres Tragwerk (7) aufweist, das zwischen dem Ladetrichter (9) und der Kippvorrichtung (14) angeordnet ist, geeignet, einerseits, um eine Platzreservierung zu bilden, um wenigstens zum Teil eine hintere Kabine (12) insbesondere zum Schutz von wenigstens einem Müllschlepper aufzunehmen, und geeignet, andererseits, um der Kippvorrichtung (14) zu erlauben, die besagte, wenigstens eine Kabine (12) oben zu umgehen, und die Produkte des besagten Behälters (2) in den besagten Ladetrichter (9) auszuschütten, wobei das besagte hintere Tragwerk (7) außerdem mit der besagten Türstruktur zusammenwirkt, um die besagte Kabine (12) bei dem Ausleeren des Hauptbehälters (30) einzuziehen.

2. Fahrzeug nach Anspruch 1, bei dem das hintere Tragwerk (7) unterhalb der Haupttürstruktur (8) vorspringt, um die Schwelle der Kabine (12) zu positionieren.

3. Fahrzeug nach Anspruch 1, bei dem die hintere Kabine (12) längsseitig am hinteren Tragwerk (7) angeordnet ist, wobei die Zugangsöffnung (15) der Kabine nach der seitlichen Fläche des Hauptbehälters (30) gerichtet sei.

4. Fahrzeug nach Anspruch 1, bei dem das hintere Tragwerk wenigstens zum Teil einen sekundären Behälter (17) für die Sammlung der Produkte und einen Schornstein (18) für die Lenkung des Flusses der besagten Produkte bildet, die in den besagten sekundären Behälter (17) ausgeschüttet werden.

5. Fahrzeug nach Anspruch 4, bei dem das hintere Tragwerk (7) außerdem eine zweite Türstruktur bildet, die mit der besagten Haupttürstruktur (8) gelenkig verbunden ist, wobei die besagte zweite Türstruktur geeignet sei, um sich einzuziehen, um das Ausleeren des sekundären Behälters (17) zu erlauben.

6. Fahrzeug nach Anspruch 1, bei dem die hintere Kabine (12) ein Beobachtungsfenster aufweist, geeignet, um wenigstens Einblick in den hinteren Teil des Fahrzeugs vom Inneren der besagten hinteren Kabine her zu erlauben,

7. Fahrzeug nach Anspruch 1, das außerdem eine zweite vordere Ladestation (21) aufweist, wobei das besagte Fahrzeug außerdem eine vordere seitliche Kabine (19) zum Schutz von wenigstens einem Müllschlepper aufweist.

8. Fahrzeug nach einem der Ansprüche 1 oder 7, bei dem die Schutzkabine und/oder -kabinen (12 ; 19) und/oder das Fahrerhaus (20) des Fahrzeugs mit Audio- und/oder Video-Sende-und Empfangsmitteln ausgestattet sind, um dem betroffenen Müllschlepper zu erlauben, sich mit dem Fahrer des Fahrzeugs zu unterhalten, und/oder den Müllschleppern zu erlauben, sich untereinander zu unterhalten.

9. Fahrzeug nach Anspruch 1, bei dem die hintere Kabine (12) mit einer Steuervorrichtung ausgestattet ist, die die Rückwärtsfahrt des Fahrzeugs erlaubt oder nicht erlaubt, wobei die besagte Steuervorrichtung im Falle einer Rückwärtsfahrt Notmittel aufweist, um das Fahrzeug anzuhalten.

10. Fahrzeug nach Anspruch 1 oder 7, bei dem wenigstens eine Schutzkabine (12 ; 19) eine Tür aufweist, geeignet, um die besagte Kabine zu schließen, ja sogar einen Sitz für den Müllschlepper aufweist, der mit einem Sicherheitsgurt ausgestattet ist.
